# EUROPEAN PATENT APPLICATION

(11) **EP 4 834 105 A1**
(43) Date of publication of application: **04.11.2026**
(21) Application number: 25220331.0
(22) Date of filing: 03.12.2025
(51) Int. Cl.: A01K 89/01

(54) **FISHING REEL**

(30) Priority: 01.05.2025 JP 2025075978
(71) Applicant: Globeride, Inc., Higashikurume-shi, Tokyo 203-8511 (JP)
(72) Inventor: HOSHI, Kojiro, Higashikurume-shi, 203-8511 (JP)
(74) Representative: Boult Wade Tennant LLP

(57) **Abstract**

A fishing reel (1) incorporates a one-way clutch (20) that allows rotation in one direction of a rotation drive shaft (11) supported in a reel body (2) and prevents rotation in another direction, in which the one-way clutch (20) has an assembly structure (23) comprising a first holder (23A) comprising an inner ring (21), an outer ring (27), a plurality of rolling members (25), a plurality of biasing springs (24) that bias the plurality of rolling members (25), and a plurality of holding portions (23a) that hold each of the plurality of biasing springs (24), and a second holder (23B) attached to the first holder (23A) so as to hold the outer ring (27) in an axial direction, and the first holder (23A) comprises an operating part (29), and the first holder (23A) is configured to be relatively rotatable in a circumferential direction with respect to the second holder (23B) by an operation of the operating part (29).

## Description

### BACKGROUND OF THE INVENTION

### 1. TECHNICAL FIELD

The present invention relates to a fishing reel comprising a one-way clutch.

### 2. DESCRIPTION OF THE RELATED ART

Conventionally, a spinning reel type fishing reel incorporates a reverse rotation prevention mechanism that allows rotation of a rotor in a fishing line winding direction by a rotation operation of a handle and prevents reverse rotation of the rotor when the handle is to be reversely rotated. Normally, the reverse rotation prevention mechanism includes a one-way clutch including an inner ring fitted into a pinion gear to prevent rotation, a holder disposed radially outside the inner ring and holding a plurality of rolling members, and an outer ring disposed radially outside the holder and non-rotatably fixed to a reel body.

As a fishing reel including such a one-way clutch, JP 2024-032092 A discloses a fishing reel incorporating a one-way clutch that allows rotation of a rotation drive shaft supported in a reel body in one direction and prevents rotation in the other direction, in which the one-way clutch has an assembly structure including an inner ring, an outer ring, a first holder including a holding portion holding a biasing spring for biasing a plurality of rolling members, and a second holder attached to the first holder so as to hold the outer ring in an axial direction, the reel body is provided with a regulation portion that is fixed so as to regulate the movement of the one-way clutch in a rotation direction, the first holder and the outer ring are respectively provided with stoppers protruding radially outward, and the movement of the one-way clutch in the rotation direction is regulated by the regulation portion of the reel body and each stopper.

### RELEVANT REFERENCES

### LIST OF RELEVANT PATENT LITERATURE

Patent Literature 1: Japanese Patent Application Publication No. 2024-032092

### SUMMARY OF THE INVENTION

However, in the fishing reel disclosed in JP 2024-032092 A, no specific configuration has been presented that realizes suppression of a dimension (height) of the one-way clutch while enabling switching between enabling and disabling of reverse rotation, such as unwinding a tangled fishing line by reverse rotation or adjusting the drop in casting (for example, carp fishing or bait fishing).

The present invention has been made in view of the above circumstances, and an object of the present invention is to provide a fishing reel comprising a one-way clutch capable of suppressing a dimension (height) of the one-way clutch while enabling switching between enabling and disabling of reverse rotation of the one-way clutch. Other objects of the present invention will become apparent by reference to the entire specification.

A fishing reel according to one embodiment of the present invention is a fishing reel incorporating a one-way clutch that allows rotation in one direction of a rotation drive shaft supported in a reel body and prevents rotation in another direction, in which the one-way clutch has an assembly structure comprising a first holder comprising an inner ring, an outer ring, a plurality of rolling members, a plurality of biasing springs that bias the plurality of rolling members, and a plurality of holding portions that hold each of the plurality of biasing springs, and a second holder attached to the first holder so as to hold the outer ring in an axial direction, and the first holder comprises an operating part, and the first holder is configured to be relatively rotatable in a circumferential direction with respect to the second holder by an operation of the operating part.

In the fishing reel according to one embodiment of the present invention, the first holder is configured to be relatively rotatable by an angle in a range of 0 degrees to 20 degrees in a circumferential direction with respect to the second holder.

In the fishing reel according to one embodiment of the present invention, the second holder is configured to comprise a plurality of bosses on an inner surface of the second holder. In addition, in the fishing reel according to one embodiment of the present invention, each of the plurality of bosses is disposed 0.05 mm to 0.2 mm above each of the plurality of biasing springs.

In the fishing reel according to one embodiment of the present invention, each of the plurality of bosses of the second holder is configured to relatively move in the circumferential direction with respect to each of the plurality of biasing springs in a case where the first holder relatively rotates.

In the fishing reel according to one embodiment of the present invention, each of the plurality of holding portions of the first holder is cut out in the circumferential direction to enable rotational movement of a boss of the second holder.

In the fishing reel according to one embodiment of the present invention, each of the plurality of holding portions of the first holder has a base portion, and the base portion comprises a support wall that supports each of the plurality of biasing springs, and a cutout portion that enables rotational movement of a boss of the second holder.

In the fishing reel according to one embodiment of the present invention, the first holder comprises a locking portion, the second holder comprises a locked portion to which the locking portion is locked, and the locking portion is configured to be relatively rotatable in a circumferential direction with respect to the locked portion.

In the fishing reel according to one embodiment of the present invention, the locking portion has a claw-like portion, the locked portion has an opening and an edge, the claw-like portion is locked to the edge, and the claw-like portion is configured to be relatively rotatable in a circumferential direction along the edge.

In the fishing reel according to one embodiment of the present invention, in a locked state of the one-way clutch, each of the plurality of rolling members comes into contact with a wedge-shaped surface formed on an inner surface of the first holder to prevent rotation of the plurality of rolling members.

In the fishing reel according to one embodiment of the present invention, in the locked state of the one-way clutch, each of the plurality of bosses has a length, when viewed as a projection length from above, that is in a range of 45% to 55% of an axial length of each of the plurality of biasing springs.

In the fishing reel according to one embodiment of the present invention, each of the plurality of bosses of the second holder is provided so as to overlap at least a part of each of the plurality of rolling members when viewed in the axial direction of the one-way clutch.

According to the above embodiment, it is possible to provide the fishing reel comprising the one-way clutch capable of suppressing a dimension (height) of the one-way clutch while enabling switching between enabling and disabling of reverse rotation of the one-way clutch.

### BRIEF DESCRIPTION OF THE DRAWINGS

FIG. 1 is an exploded perspective view of a fishing reel according to one embodiment of the present invention;
FIG. 2 is a cross-sectional view illustrating an outline of the fishing reel according to one embodiment of the present invention;
FIG. 3 is an overall perspective view of a one-way clutch 20 in a fishing reel 1 according to one embodiment of the present invention;
FIG. 4 is an enlarged perspective view of a part of the one-way clutch 20 in the fishing reel 1 according to one embodiment of the present invention;
FIG. 5 is an enlarged perspective view illustrating an internal structure of the one-way clutch 20 in the fishing reel 1 according to one embodiment of the present invention;
FIG. 6 is a partially enlarged view illustrating a second holder 23B of the one-way clutch 20 in the fishing reel 1 according to one embodiment of the present invention;
FIG. 7A is a view illustrating a clutch-off state (free state) of the one-way clutch 20 in the fishing reel 1 according to one embodiment of the present invention, and FIG. 7B is a view illustrating a clutch-on state (locked state) of the one-way clutch 20 in the fishing reel 1 according to one embodiment of the present invention;
FIG. 8A is a partially enlarged view in the clutch-off state (free state) of the one-way clutch 20 of the fishing reel 1 according to one embodiment of the present invention, and FIG. 8B is a partially enlarged view in the clutch-on state (locked state) of the one-way clutch 20 of the fishing reel 1 according to one embodiment of the present invention;
FIG. 9A is a view for explaining a projection length to be described later in the clutch-off state (free state) of the one-way clutch 20 of the fishing reel 1 according to one embodiment of the present invention, and FIG. 9B is a view for explaining a projection length to be described later in the clutch-on state (locked state) of the one-way clutch 20 of the fishing reel 1 according to one embodiment of the present invention; and
FIG. 10 is a view for explaining a relationship between a biasing spring 24 and a boss 31 in the one-way clutch 20 of the fishing reel 1 according to one embodiment of the present invention.

### DETAILED DESCRIPTION

An embodiment of a fishing reel according to the present invention will now be described in detail with reference to the accompanying drawings. Components common among multiple drawings are denoted by the same reference signs in the multiple drawings. It should be noted that each drawing is not necessarily drawn to an accurate scale for convenience of description.

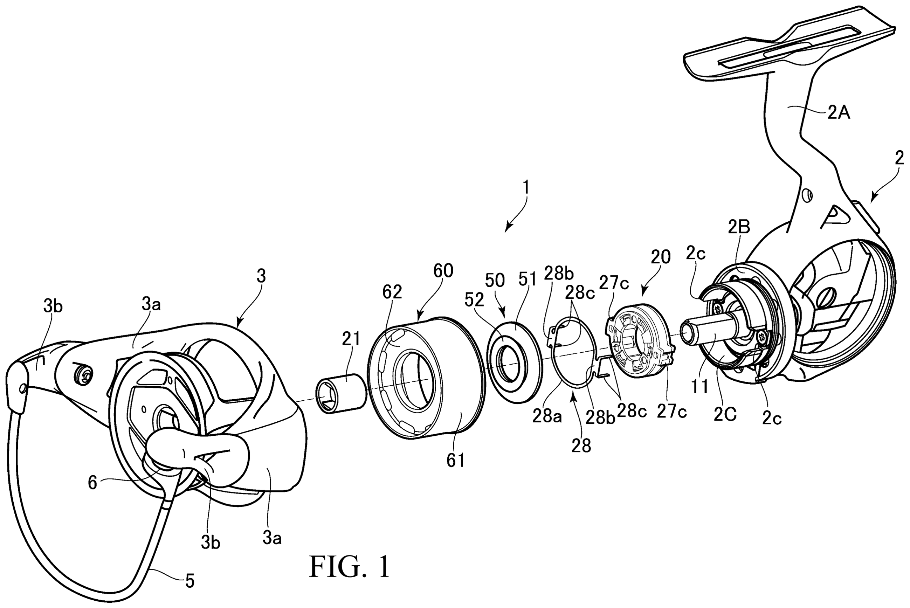

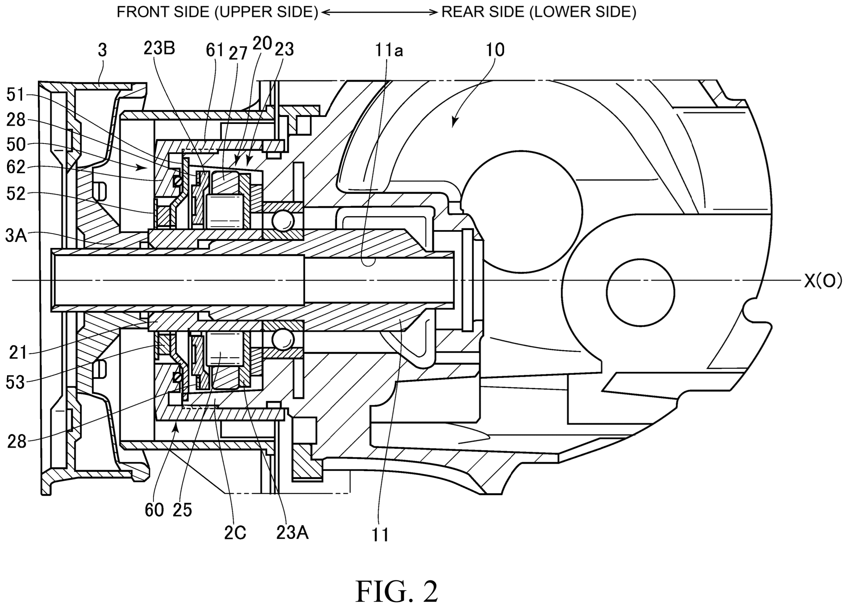

First, an overall configuration of the fishing reel according to one embodiment of the present invention will be described with reference to FIGS. 1 and 2. FIG. 1 is an exploded perspective view of the fishing reel according to one embodiment of the present invention. FIG. 2 is a cross-sectional view illustrating an outline of the fishing reel according to one embodiment of the present invention. In the following description of a one-way clutch, a direction on a spool side is defined as a front side (upper side), a direction on a reel body side is defined as a rear side (lower side), an axial direction X is defined as an axial direction of a spool shaft, and a center O is defined as an axial position of the spool shaft (see FIG. 2).

The fishing reel according to one embodiment of the present invention is a spinning reel (hereinafter, referred to as a fishing reel) 1, and a reel leg 2A to be mounted on a fishing rod is integrally formed with a reel body 2. A rotor 3 that is rotatably supported and a known spool (not illustrated in the drawings) that is supported to be movable back and forth in synchronization with the rotational motion of the rotor 3 are disposed in front of the reel body 2. The rotor 3 comprises a pair of arm portions 3a that rotates around the spool, and a bail support member 3b, to which a base end of a bail 5 is attached, is rotatably supported at the front end of each arm portion 3a between a fishing line winding position and a fishing line releasing position. In this case, one base end of the bail 5 is attached to a fishing line guide portion (line roller) 6 provided integrally with the bail support member 3b.

In the reel body 2, a handle shaft is rotatably supported via a bearing, and a handle (not illustrated) is attached to a protrusion end thereof. The handle shaft is provided with a driving force transmission mechanism 10 that transmits a driving force to the rotor 3 to rotationally drive the rotor when the handle is rotationally operated. In addition, the driving force transmission mechanism 10 comprises a drive gear integrally rotatably mounted on the handle shaft, and a pinion 11 comprising a pinion tooth portion meshing with the drive gear. The pinion 11 extends in a front-rear direction orthogonal to the handle shaft, and has a function as a rotation drive shaft in which a cavity portion 11a extending in an axial direction is formed. In this case, a spool shaft (not illustrated) that engages with an oscillating mechanism (not illustrated) that moves the spool back and forth when the handle (not illustrated) is rotationally operated is inserted through the cavity portion 11a, and the spool is mounted on a distal end thereof.

The pinion 11 is rotatably supported by the reel body 2, the pinion 11 extends toward the spool side, and the rotor 3 is integrally rotatably attached to a distal end of the pinion 11. The rotor 3 is fixed by externally fitting a through-hole of a boss portion 3A formed at a center portion into the distal end of the pinion 11 and tightening a nut (not illustrated). In addition, a one-way clutch 20 constituting a reverse rotation prevention mechanism is disposed on the pinion 11. With such a configuration, when the handle is wound, the rotor 3 is rotationally driven via the driving force transmission mechanism 10, and the spool is reciprocated in the front-rear direction via the oscillating mechanism (not illustrated) and the spool shaft (not illustrated). Therefore, the fishing line is evenly wound around the spool via the fishing line guide portion 6 of the rotationally driven rotor 3.

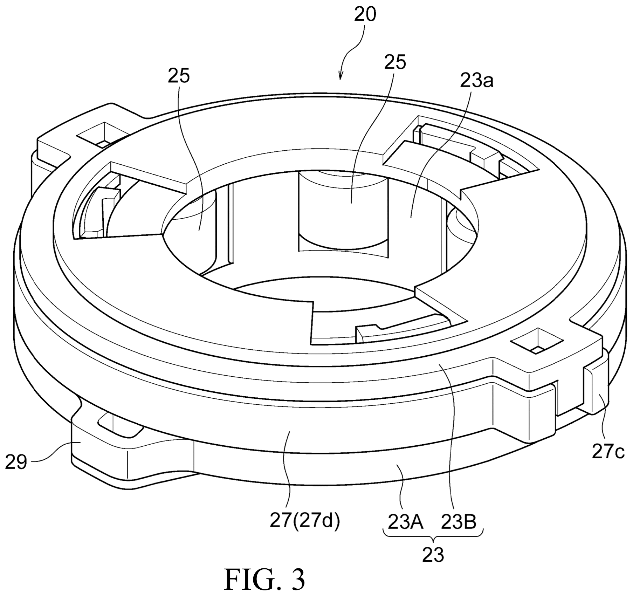

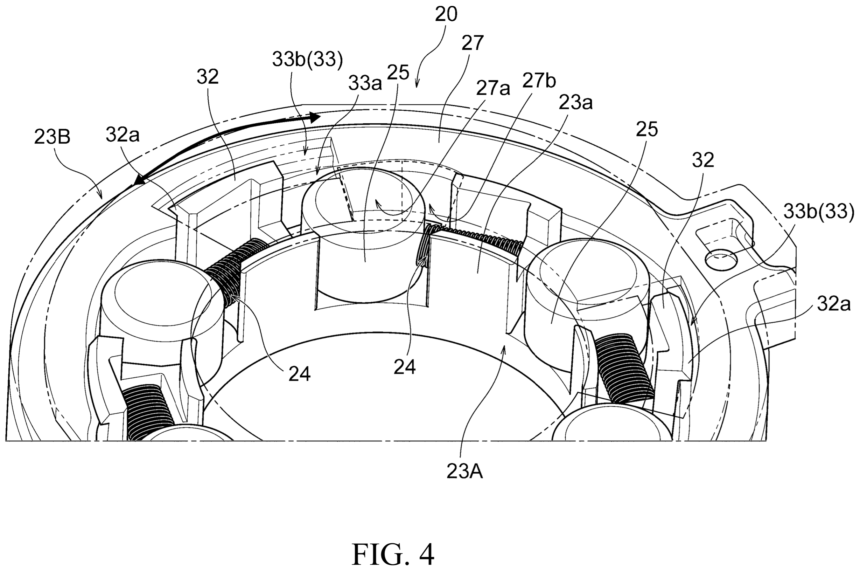

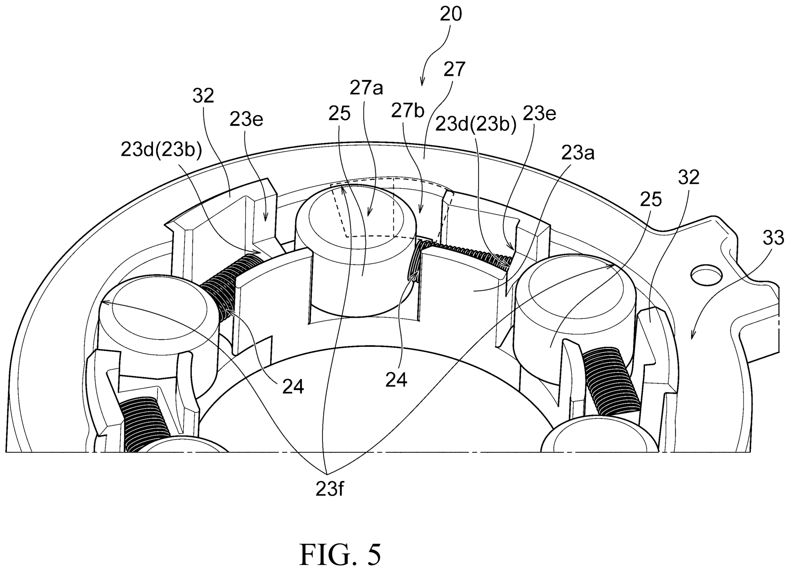

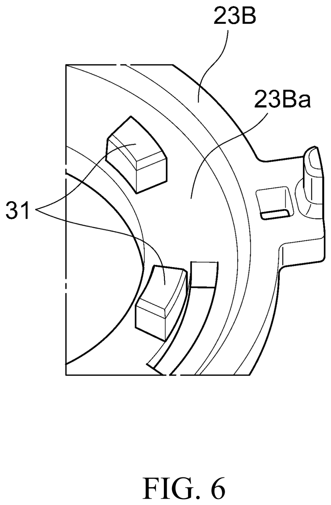

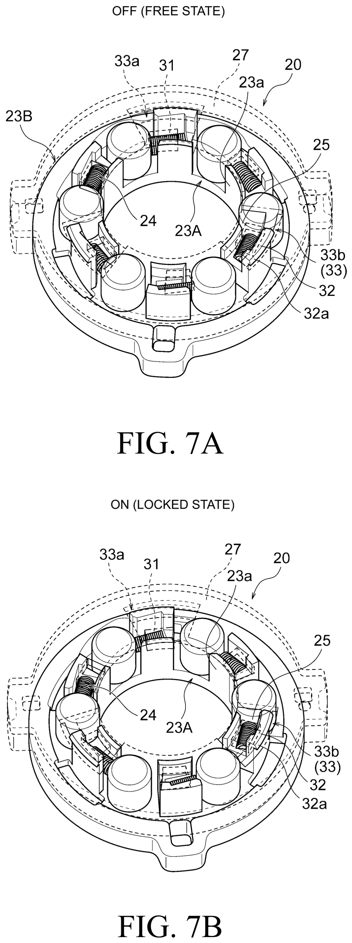

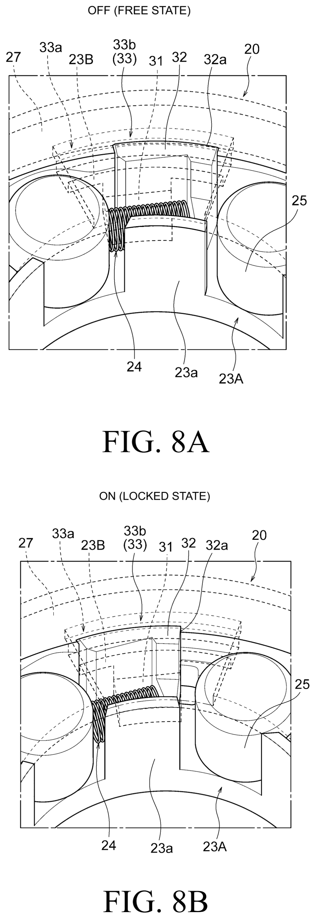

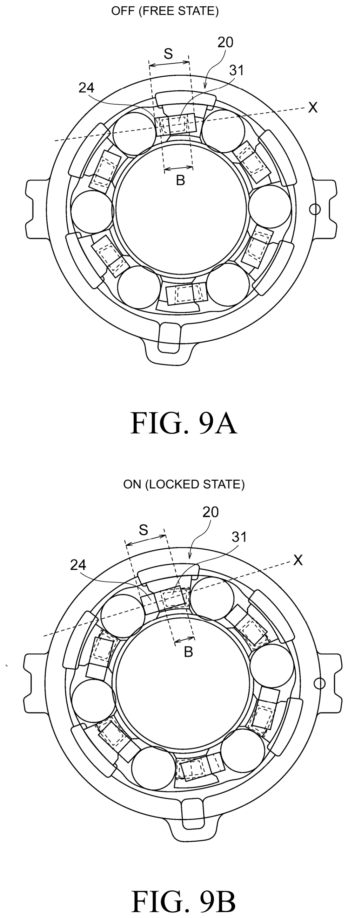

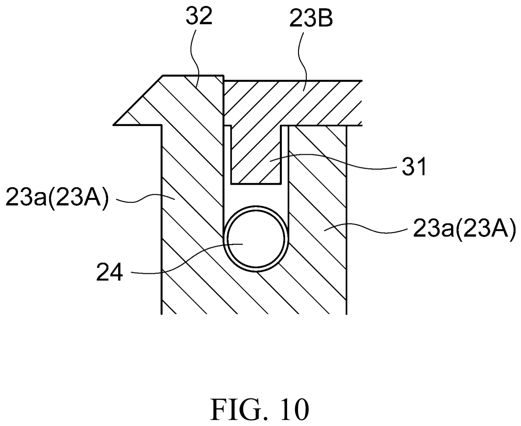

Next, the one-way clutch 20 in the fishing reel 1 according to one embodiment of the present invention will be described with reference to FIGS. 1 and 2 and FIGS. 3 to 10. FIG. 3 is an overall perspective view of the one-way clutch 20 in the fishing reel 1 according to one embodiment of the present invention, FIG. 4 is an enlarged perspective view of a part of the one-way clutch 20 in the fishing reel 1 according to one embodiment of the present invention, FIG. 5 is an enlarged perspective view illustrating an internal structure of the one-way clutch 20 in the fishing reel 1 according to one embodiment of the present invention, and FIG. 6 is a partially enlarged view illustrating a second holder 23B of the one-way clutch 20 in the fishing reel 1 according to one embodiment of the present invention. FIG. 7A is a view illustrating a clutch-off state (free state) of the one-way clutch 20 in the fishing reel 1 according to one embodiment of the present invention, and FIG. 7B is a view illustrating a clutch-on state (locked state) of the one-way clutch 20 in the fishing reel 1 according to one embodiment of the present invention. In addition, FIG. 8A is a partially enlarged view in the clutch-off state (free state) of the one-way clutch 20 of the fishing reel 1 according to one embodiment of the present invention, and FIG. 8B is a partially enlarged view in the clutch-on state (locked state) of the one-way clutch 20 of the fishing reel 1 according to one embodiment of the present invention. In addition, FIG. 9A is a view for explaining a projection length to be described later in the clutch-off state (free state) of the one-way clutch 20 of the fishing reel 1 according to one embodiment of the present invention, and FIG. 9B is a view for explaining a projection length to be described later in the clutch-on state (locked state) of the one-way clutch 20 of the fishing reel 1 according to one embodiment of the present invention. FIG. 10 is a view for explaining a relationship between a biasing spring 24 and a boss 31 in the one-way clutch 20 of the fishing reel 1 according to one embodiment of the present invention.

As illustrated in FIGS. 3 to 5, the fishing reel 1 according to one embodiment of the present invention is a fishing reel 1 incorporating a one-way clutch 20 that allows rotation in one direction of a rotation drive shaft supported in a reel body 2 and prevents rotation in another direction, in which the one-way clutch 20 has a holder 23 (assembly structure) comprising a first holder 23A comprising an inner ring 21, an outer ring 27, a plurality of rolling members 25, a plurality of biasing springs 24 that bias the plurality of rolling members 25, and a plurality of holding portions 23a that hold each of the plurality of biasing springs 24, and a second holder 23B attached to the first holder 23A so as to hold the outer ring 27 in an axial direction, the first holder 23A comprises an operating part 29, and the first holder 23A is configured to be relatively rotatable in a circumferential direction (for example, a direction indicated by an arrow in FIG. 4) with respect to the second holder 23B by an operation of the operating part 29. Here, these constituent members are assembled (an assembly structure in which a plurality of constituent members are integrated; also referred to as ASSY), and can be handled integrally. In addition, by configuring the holder 23 with a plurality of members (the first holder 23A and the second holder 23B) as described above, the constituent members comprising the outer ring and the like are suppressed from coming off in the axial direction and assembling is facilitated.

According to the fishing reel 1 of one embodiment of the present invention, it is possible to provide the fishing reel comprising the one-way clutch capable of suppressing a dimension (height) of the one-way clutch while enabling switching between enabling and disabling of reverse rotation of the one-way clutch. When the operating part is rotated by a predetermined angle in the circumferential direction, the holding portion 23a pushes the spring, and the rolling member 25 abuts on a wedge shape surface to be described later, so that the reverse rotation of the one-way clutch is disabled. On the other hand, when the operating part is rotated in a predetermined angle reverse direction in the circumferential direction, the rolling member and the inner ring 21 are brought into a non-contact state by moving the rolling member 25 to a free region to be described later, and as a result, the reverse rotation of the one-way clutch is enabled.

The inner ring 21 is prevented from rotating with respect to the pinion 11, and has a function as a drive shaft that rotates integrally with the pinion 11. Specifically, a cross section of the pinion 11 has a shape in which a non-circular portion is partially formed, and the inner ring 21 is rotatable integrally with the pinion 11 by fitting the non-circular portion of the inner ring 21 into this portion. The holder 23 is disposed radially outside the inner ring 21, and is configured by integrating the first holder 23A and the second holder 23B as described above. In the present embodiment, the first holder 23A is disposed on the lower side, and the second holder 23B is disposed on the upper side. The first holder 23A and the second holder 23B are integrally assembled so as to hold the outer ring 27. In this case, the first holder 23A may be defined as the upper side, and the second holder 23B may be defined as the lower side.

Note that a coupling structure (engagement fixing portion) for integrating the first holder 23A and the second holder 23B is not particularly limited, but the one-way clutch 20 in the fishing reel 1 according to one embodiment of the present invention adopts a configuration in which the first holder 23A is formed with a locking portion (described later) that is displaceable and protrudes in the axial direction at a predetermined interval in the circumferential direction, and a locked portion (described later) into which the locking portion is fitted is formed at a corresponding position of the second holder 23B. In this configuration, the first holder 23A and the second holder 23B can be integrated by moving the second holder 23B in the axial direction so as to hold the outer ring 27 and engaging the locking portion with the locked portion. Details will be described later.

The first holder 23A is provided with a plurality of holding portions 23a disposed at regular intervals in the circumferential direction. Each holding portion 23a is provided with a recess 23b that is opened (opened in a counterclockwise direction as illustrated in FIG. 5) in the circumferential direction, and the biasing spring 24 is held in each recess 23b so as to be supported by a base portion to be described later. The rolling members 25 are disposed between the respective holding portions, and each rolling member 25 is biased in the circumferential direction (for example, in the counterclockwise direction; reverse rotation direction in FIG. 4) by the biasing spring 24.

The outer ring 27 is disposed radially outward of each rolling member 25 and is formed in a ring shape (or a substantially ring shape). In addition, as illustrated in FIGS. 4 and 5, on an inner circumferential surface of the outer ring 27, a wedge region 27a for preventing the rotation of each rolling member 25 and a free region 27b for freely rotating the rolling member 25 are continuously formed (a plurality of these two regions are alternately formed on the inner circumferential surface of the outer ring 27). When each rolling member 25 held by the holder 23 (first holder 23A) is biased toward the wedge region by the biasing spring 24, the rolling member 25 enters a locked state to be described later. In addition, an outer circumferential surface 27d of the outer ring 27 is formed in a circular shape (including a substantially circular shape).

A protrusion portion 27c is provided on a part of the outer ring 27 formed in the substantially ring shape so as to protrude radially outward. The protrusion portion has a function as a stopper that regulates the rotation of the outer ring 27 (hereinafter, also referred to as a stopper 27c). The stopper 27c is integrally formed so as to protrude radially outward from the outer circumferential surface 27d of the outer ring 27, and is provided at one or more places. In this case, there is a possibility that a large torque is applied to the outer ring, and stress concentrates at one place to cause a deviation or the like. Therefore, it is preferable to form two or more stoppers at equal intervals. Further details are omitted herein.

The first holder 23A has a shape similar to that of the outer ring 27, and preferably, a protrusion portion having substantially the same shape is integrally formed at the same position (a position overlapping in the axial direction) as the stopper 27c of the outer ring 27. Similarly to the outer ring, the two protrusion portions are provided so as to face each other with the axis (center O) therebetween at an interval of 180°, and have a function as the stoppers (hereinafter, also referred to as the stoppers). Further details are omitted herein.

In addition, as illustrated in FIGS. 7A to 8B, in the fishing reel 1 according to one embodiment of the present invention, in order to switch between the clutch-off state (free state) of the one-way clutch 20 and the clutch-on state (locked state) of the one-way clutch 20, the first holder 23A is configured to be relatively rotatable by an angle in a range of 0 degrees to 20 degrees in the circumferential direction (for example, a direction indicated by an arrow in FIG. 4) with respect to the second holder 23B. In addition, more preferably, the first holder 23A is configured to be relatively rotatable by an angle in a range of 0 degrees to 16 degrees in the circumferential direction (for example, the direction indicated by the arrow in FIG. 4) with respect to the second holder 23B. The reason for adopting such an angular range is based on a physical operation range of each member, and is to enable the clutch-on state (locked state) of the one-way clutch 20 to be reliably achieved without interference between the rolling member 25 and the holding portion 23a in the locked state, and to enable the rolling member 25 to be separated from the inner ring 21 in the free state.

In addition, as illustrated in FIG. 6 (and FIG. 5) and FIGS. 7A to 8B, in the fishing reel 1 according to one embodiment of the present invention, the second holder 23B is configured to comprise a plurality of bosses 31 on an inner surface (back surface) 23Ba of the second holder 23B. In addition, as illustrated in FIG. 10, in the fishing reel 1 according to one embodiment of the present invention, each of the plurality of bosses 31 is disposed 0.05 mm to 0.2 mm above each of the plurality of biasing springs 24. In this manner, during normal use, the boss 31 can effectively prevent the biasing spring 24 held by the holding portion 23a from coming off the holding portion 23a and being detached upward, while avoiding contact of the boss 31 with the biasing spring 24.

In addition, in the fishing reel 1 according to one embodiment of the present invention, each of the plurality of bosses 31 of the second holder 23B is configured to relatively move in the circumferential direction (for example, the direction indicated by the arrow in FIG. 4) with respect to each of the plurality of biasing springs 24 in a case where the first holder 23A relatively rotates. In this manner, the boss 31 is relatively movable without colliding with the biasing spring 24, so that the first holder 23A is relatively rotatable with respect to the second holder 23B.

In addition, as illustrated in FIG. 5, in the fishing reel 1 according to one embodiment of the present invention, each of the plurality of holding portions 23a of the first holder 23A is cut out in the circumferential direction (for example, in the circumferential direction in FIG. 5) in order to enable rotational movement of the boss 31 of the second holder 23B. In this manner, while holding the biasing spring 24 by the holding portion 23a, the boss 31 of the second holder 23B is movable in the circumferential direction without colliding with the holding portion 23a by cutting out the holding portion 23a in the circumferential direction, and thus the first holder 23A is relatively rotatable in a predetermined angle range (a range of 0 degrees to 20 degrees) with respect to the second holder 23B. Here, the predetermined angle of 0 degrees refers to a relative angle between the first holder 23A and the second holder 23B when the operating part 29 is operated and the operating part 29 moves to its end position on one side (for example, a right direction in FIGS. 7A and 7B) (in the clutch-on state (locked state), when a clutch ring 11 comes into contact with the rolling member 25). In addition, the predetermined angle of 20 degrees refers to a relative angle between the first holder 23A and the second holder 23B when the operating part 29 moves to its end position on another side (for example, in a left direction in FIGS. 7A and 7B) (in the clutch-off state (free state), when the rolling member 25 is completely separated from the clutch ring 11). The same applies throughout the present specification.

In addition, as illustrated in FIG. 5, in the fishing reel 1 according to one embodiment of the present invention, each of the plurality of holding portions 23a of the first holder 23A has a base portion 23b, and the base portion 23b comprises a support wall 23d that supports each of the plurality of biasing springs 24 and a cutout portion 23e that enables rotational movement of the boss 31 of the second holder 23B. In this manner, while holding the biasing spring 24 by the holding portion 23a, the boss 31 of the second holder 23B is movable in the circumferential direction without colliding with the support wall 23d by forming the cutout portion 23e, and thus the first holder 23A is relatively rotatable in the predetermined angle range (range of 0 degrees to 20 degrees) with respect to the second holder 23B.

In addition, as illustrated in FIGS. 4 and 5, in the fishing reel 1 according to one embodiment of the present invention, the first holder 23A comprises a locking portion 32, the second holder 23B comprises a locked portion 33 to which the locking portion 32 is locked, and the locking portion 32 is configured to be relatively rotatable in the circumferential direction (for example, the direction indicated by the arrow in FIG. 4) with respect to the locked portion 33. In this manner, the first holder 23A and the second holder 23B can be coupled while the first holder 23A is relatively rotatable in the circumferential direction with respect to the second holder 23B.

In addition, as illustrated in FIG. 4, in the fishing reel 1 according to one embodiment of the present invention, the locking portion 32 has a claw-like portion 32a, the locked portion 33 has an opening 33a and an edge 33b, the claw-like portion 32a is locked to the edge 33b, and the claw-like portion 32a is configured to be relatively rotatable in the circumferential direction (for example, the direction indicated by the arrow in FIG. 4) along the edge 33b. In this manner, the first holder 23A and the second holder 23B can be coupled while the first holder 23A is relatively rotatable in the circumferential direction with respect to the second holder 23B.

In addition, as illustrated in FIG. 4, in the fishing reel 1 according to one embodiment of the present invention, in the locked state of the one-way clutch 20, each of the plurality of rolling members 25 comes into contact with a wedge-shaped surface 23f formed on the inner surface of the first holder 23A to prevent the rotation of the plurality of rolling members 25. Here, the locked state refers to a state in which, as a result of the rotation of the operating part by the predetermined angle in the circumferential direction, the holding portion 23a pushes the spring, and the rolling member 25 abuts on the wedge-shaped surface 23f, so that the reverse rotation of the one-way clutch becomes impossible (the same applies throughout the present specification).

In addition, as illustrated in FIGS. 9A and 9B, in the fishing reel 1 according to one embodiment of the present invention, in the locked state of the one-way clutch 20, each of the plurality of bosses 31 has a projection length (a projection length when viewed in the axial direction (longitudinal direction) of each of the plurality of biasing springs 24 (an axial length in which both overlap as a result of projection)) B from above (the upper side when viewed in the axial direction X of the one-way clutch 20) (to each of the plurality of biasing springs 24) that is a length in a range of 45% to 55% of an axial (longitudinal) length S of each of the plurality of biasing springs 24. In this manner, not only can collision of the boss 31 with the rolling member 25 be avoided, but the boss 31 can also effectively prevent the biasing spring 24 held by the holding portion 23a from coming off the holding portion 23a and being detached upward.

In the fishing reel 1 according to one embodiment of the present invention, each of the plurality of bosses 31 of the second holder 23B is provided so as to overlap at least a part of each of the plurality of rolling members 25 when viewed in the axial direction of the one-way clutch 20. In this manner, by disposing the boss in a space between the rolling member 25, and the biasing spring 24 and the holding portion 23a, the boss 31 can be disposed in the space while effectively preventing the biasing spring 24 held by the holding portion 23a from coming off the holding portion 23a and being detached upward, and thus the axial dimension (height) of the one-way clutch 20 can be reduced.

The dimension, material, and disposition of each component described in the present specification are not limited to those explicitly described in the embodiments, and each component can be modified to have any dimension, material, and disposition that are within the scope of the present invention. In addition, components not explicitly described in the present specification can also be added to the described embodiments, or some of the components described in the embodiments can be omitted.

### REFERENCE SIGNS LIST

- 1: spinning reel (fishing reel)
- 2: reel body
- 2C: circumferential wall (regulation portion)
- 2c: notch portion
- 3: rotor
- 20: one-way clutch
- 23: holder
- 23A: first holder
- 23B: second holder
- 23Ba: inner surface (back surface)
- 23a: holding portion
- 23b: base portion
- 23d: support wall
- 23e: cutout portion
- 23f: wedge-shaped surface
- 24: biasing spring
- 27: outer ring
- 27c: stopper
- 29: operating part
- 31: boss
- 32: locking portion
- 33: locked portion

## Claims

1. A fishing reel incorporating a one-way clutch that allows rotation in one direction of a rotation drive shaft supported in a reel body and prevents rotation in another direction, wherein
the one-way clutch has an assembly structure comprising a first holder comprising an inner ring, an outer ring, a plurality of rolling members, a plurality of biasing springs that bias the plurality of rolling members, and a plurality of holding portions that hold each of the plurality of biasing springs, and a second holder attached to the first holder so as to hold the outer ring in an axial direction, and
the first holder comprises an operating part, and the first holder is configured to be relatively rotatable in a circumferential direction with respect to the second holder by an operation of the operating part.

2. The fishing reel according to claim 1, wherein the first holder is configured to be relatively rotatable by an angle in a range of 0 degrees to 20 degrees in a circumferential direction with respect to the second holder.

3. The fishing reel according to claim 1, wherein the second holder comprises a plurality of bosses on an inner surface of the second holder.

4. The fishing reel according to claim 3, wherein each of the plurality of bosses is disposed 0.05 mm to 0.2 mm above each of the plurality of biasing springs.

5. The fishing reel according to claim 3 or 4, wherein each of the plurality of bosses of the second holder is configured to relatively move in the circumferential direction with respect to each of the plurality of biasing springs in a case where the first holder relatively rotates.

6. The fishing reel according to claim 1, wherein each of the plurality of holding portions of the first holder is cut out in the circumferential direction to enable rotational movement of a boss of the second holder.

7. The fishing reel according to claim 1, wherein each of the plurality of holding portions of the first holder has a base portion, and the base portion comprises a support wall that supports each of the plurality of biasing springs, and a cutout portion that enables rotational movement of a boss of the second holder.

8. The fishing reel according to claim 1, wherein the first holder comprises a locking portion, the second holder comprises a locked portion to which the locking portion is locked, and the locking portion is configured to be relatively rotatable in a circumferential direction with respect to the locked portion.

9. The fishing reel according to claim 8, wherein the locking portion has a claw-like portion, the locked portion has an opening and an edge, the claw-like portion is locked to the edge, and the claw-like portion is configured to be relatively rotatable in a circumferential direction along the edge.

10. The fishing reel according to claim 1, wherein in a locked state of the one-way clutch, each of the plurality of rolling members comes into contact with a wedge-shaped surface formed on an inner surface of the first holder to prevent rotation of the plurality of rolling members.

11. The fishing reel according to claim 3, wherein in the locked state of the one-way clutch, each of the plurality of bosses has a length, when viewed as a projection length from above, that is in a range of 45% to 55% of an axial length of each of the plurality of biasing springs.

12. The fishing reel according to claim 1, wherein each of the plurality of bosses of the second holder is provided so as to overlap at least a part of each of the plurality of rolling members when viewed in the axial direction of the one-way clutch.

## Amended claims

### Amended claims in accordance with Rule 137(2) EPC.

1. A fishing reel (1) incorporating a one-way clutch (20) that allows rotation in one direction of a rotation drive shaft supported in a reel body (2) and prevents rotation in another direction, wherein
the one-way clutch (20) has an assembly structure comprising a first holder (23A) comprising an inner ring, an outer ring (27), a plurality of rolling members, a plurality of biasing springs (24) that bias the plurality of rolling members, and a plurality of holding portions (23a) that hold each of the plurality of biasing springs (24), and a second holder (23B) attached to the first holder (23A) so as to hold the outer ring (27) in an axial direction, **characterized in that**:
the first holder (23A) comprises an operating part (29), and the first holder (23A) is configured to be relatively rotatable in a circumferential direction with respect to the second holder (23B) by an operation of the operating part (29), and
the first holder (23A) is configured to be relatively rotatable by an angle in a range of 0 degrees to 20 degrees in a circumferential direction with respect to the second holder (23B).

2. The fishing reel (1) according to claim 1, wherein the second holder (23B) comprises a plurality of bosses (31) on an inner surface (23Ba) of the second holder (23B).

3. The fishing reel (1) according to claim 2, wherein each of the plurality of bosses (31) is disposed 0.05 mm to 0.2 mm above each of the plurality of biasing springs (24).

4. The fishing reel (1) according to claim 2 or 3, wherein each of the plurality of bosses (31) of the second holder (23B) is configured to relatively move in the circumferential direction with respect to each of the plurality of biasing springs (24) in a case where the first holder (23A) relatively rotates.

5. The fishing reel (1) according to claim 1, wherein each of the plurality of holding portions (23a) of the first holder (23A) is cut out in the circumferential direction to enable rotational movement of a boss (31) of the second holder (23B).

6. The fishing reel (1) according to claim 1, wherein each of the plurality of holding portions (23a) of the first holder (23A) has a base portion (23b), and the base portion (23b) comprises a support wall (23d) that supports each of the plurality of biasing springs (24), and a cutout portion (23e) that enables rotational movement of a boss (31) of the second holder (23B).

7. The fishing reel (1) according to claim 1, wherein the first holder (23A) comprises a locking portion (32), the second holder (23B) comprises a locked portion (33) to which the locking portion (32) is locked, and the locking portion (32) is configured to be relatively rotatable in a circumferential direction with respect to the locked portion (33).

8. The fishing reel (1) according to claim 7, wherein the locking portion (32) has a claw-like portion, the locked portion (33) has an opening and an edge, the claw-like portion is locked to the edge, and the claw-like portion is configured to be relatively rotatable in a circumferential direction along the edge.

9. The fishing reel (1) according to claim 1, wherein in a locked state of the one-way clutch (20), each of the plurality of rolling members comes into contact with a wedge-shaped surface (23f) formed on an inner surface of the first holder (23A) to prevent rotation of the plurality of rolling members.

10. The fishing reel (1) according to claim 2, wherein in the locked state of the one-way clutch (20), each of the plurality of bosses (31) has a length, when viewed as a projection length from above, that is in a range of 45% to 55% of an axial length of each of the plurality of biasing springs (24).

11. The fishing reel (1) according to claim 2, wherein each of the plurality of bosses (31) of the second holder (23B) is provided so as to overlap at least a part of each of the plurality of rolling members when viewed in the axial direction of the one-way clutch (20).
